Europäisches Patentamt

European Patent Office

Office européen des brevets

(11) Veröffentlichungsnummer: **0 146 029**
**B1**

(12) **EUROPÄISCHE PATENTSCHRIFT**

(45) Veröffentlichungstag der Patentschrift:
**30.03.88**

(21) Anmeldenummer: **84114350.6**

(22) Anmeldetag: **28.11.84**

(51) Int. Cl.⁴: **A 61 G 5/00**

(54) Treppengängiges Fahrzeug.

(30) Priorität: **12.12.83  CH 66181/83**

(43) Veröffentlichungstag der Anmeldung:
**26.06.85 Patentblatt 85/26**

(45) Bekanntmachung des Hinweises auf die Patenterteilung:
**30.03.88 Patentblatt 88/13**

(84) Benannte Vertragsstaaten:
**CH DE GB LI NL SE**

(56) Entgegenhaltungen:
**DE - A - 2 657 605**
**DE - A - 2 726 236**
**FR - A - 2 502 090**
**FR - A - 2 538 245**
**US - A - 3 068 950**
**US - A - 4 401 178**

(73) Patentinhaber: **Peter Auer AG, Ausserdorf 3,**
**CH-8479 Truttikon (CH)**

(72) Erfinder: **Auer, Peter, Ausserdorf 3, CH-8479 Truttikon**
**(CH)**

(74) Vertreter: **Blumbach Weser Bergen Kramer Zwirner**
**Hoffmann Patentanwälte, Radeckestrasse 43,**
**D-8000 München 60 (DE)**

ACTORUM AG

# Beschreibung

Schwerbehinderte Personen werden bekanntlich mit Rollstuhl gefahren, wobei das Problem der Bewältigung von Treppen gegeben ist. Zu diesem Zweck sind spezielle Krankenstühle entwickelt worden, wobei man die Treppenfahrt mit Hilfe eines verstellbaren Raupenfahrwerkes (US-A-3 068 950) oder mit einem Radstern (FR-A-2 502 090) bewerkstelligt hat.

Bei dem Krankenstuhl mit verstellbarem Raupenfahrwerk (US-A-3 068 950) ist eine ziemlich ausladende Bauweise erforderlich, die vier Treppenstufen überbrückt und infolge hydraulischer Verstellorgane relativ schwer ist. Beim Übergang zwischen der Horizontalfahrt und der Treppenfahrt muss das Fahrzeug um die oberste Treppenkante geschwenkt werden. Man kann dies durch Weiterfahrt des Fahrzeugs bewirken, wobei dieses um die Treppenkante plötzlich kippt, sobald der Schwerpunkt die Treppenkante passiert hat. Wegen der Masse des Fahrzeugs ist diese Situation gefahrbringend. Zur Abwendung des plötzlichen Abkippens sind deshalb hydraulisch schwenkbare Kufen vorgesehen, mit denen sich das Fahrzeug auf der Fläche (Horizontalebene oder Treppenschräge) abstützen kann, die von dem Raupentrieb gerade nicht erfasst wird. Die Kufen sind seitlich neben dem Raupentrieb angeordnet, ragen aber nicht über die vordere Begrenzung des Chassis hinaus. Eine Verlängerung der Stützfläche des Fahrzeugs ist somit nicht beabsichtigt, zumal die Stützfläche ohnehin einigemal grösser ist als bei einem treppengängigen Transportfahrzeug mit den Merkmalen des Oberbegriffs des Anspruchs 1.

Bei dem fahrbaren, treppengängigen Krankenstuhl mit dem Radstern (FR-A-2 502 090) ist ein den Radstern antreibender Motor vorgesehen, dessen Reaktionsmoment auf eine schwenkbar gelagerte Kufe geleitet wird, die sich auf den Treppenkanten abstützt, wenn der Radstern die Treppen erklimmt. Am vorderen Ende der Kufe ist eine Rolle angebracht, die während der Horizontalfahrt vom Boden abgehoben ist und dann über das Fahrwerk des Krankenstuhls nach vorne vorsteht. Bei der Fahrt über normal steile Treppen ragt die Kufe nicht über die vordere Begrenzung des Chassis hinaus. Mangels eines Raupenfahrwerkes erfolgt auch keine Zusammenarbeit mit einem solchen.

Bei einem bekannten Fahrzeug (DE-A-2 657 605) mit den Merkmalen des Oberbegriffs des Anspruchs 1 ist das Chassis schmal und niedrig ausgebildet, um einen Rollstuhl zu unterfangen und mittels eines Aufsatzes (Rollstuhladapters) zu halten. Auf der Treppe wird das Fahrzeug mittels Raupen bewegt, die aber auf ebener Fahrfläche unpraktisch sind. Man hat deshalb eine Rollvorrichtung am Fahrzeug angebracht, mit welcher man das Fahrzeug auf ebener Fahrfläche manövrieren kann. Die bekannte Rollvorrichtung besteht aus einem zusätzlichen, absenkbaren Gestell mit Rollensatz, Dreh- oder Gleitfüssen, wobei die Absenkung motorisch oder beispielsweise mittels Fussraste erfolgen muss. Mittels dieser Rollvorrichtung kann man das Fahrzeug auf engen Podesten wenden. Dabei ist es vorteilhaft, wenn die Raupen des Fahrzeugs nicht allzu lang sind. Die dadurch bedingte verkürzte Fahrzeuglänge ist jedoch bei der Bewältigung von steilen Treppen nachteilig und gefahrbringend.

Ein weiteres oberbegriffliches Raupenfahrzeug (US-A-4 401 178) besitzt ebenfalls ein niedriges Chassis mit zwei motorisch angetriebenen Raupen, welche eine an der Bodenlauffläche starre, am rückwärtigen Ende abgewinkelte Gleitführung aufweisen. Für den antriebslosen Horizontaltransport besitzt dieses Fahrzeug im Bereich der abgewinkelten Raupenführung Transportrollen, welche für den Gebrauch seitlich eingesteckt werden.

Diese treppengängigen Raupenfahrzeuge für Rollstühle setzen eine schmale Bauweise voraus, damit das Chassis mit den angetriebenen Raupen innerhalb des unteren Zwischenraums eines Rollstuhlfahrgestells Platz findet. Wegen der geringen Spurweite ist die dadurch resultierende seitliche Standfestigkeit mangelhaft. Zur Bewältigung von steilen Treppen benötigt man eine relativ grosse Raupenlänge; dadurch wird aber die Manövrierfähigkeit des Fahrzeugs in der Ebene herabgesetzt. Der in der Praxis anzutreffende Kompromiss einer verkürzten Raupenlänge vermag nicht zu befriedigen.

Die für den Horizontaltransport aufsteckbaren Fahrrollen sind mühsam in der Anwendung, weil sie für die Treppenfahrt demontiert werden müssen. Die mittels Fussraste absenkbaren Fahrrollen setzen eine ziemlich aufwendige Konstruktion voraus und müssen bei jedem Zwischenpodest erneut betätigt werden. Die richtige Position der Fussraste soll nach TÜV-Forderung elektrisch überwacht werden, was aufwendig ist.

Der Erfindung liegt die Aufgabe zugrunde, die Fahrtsicherheit durch Erhöhung der Standfestigkeit des Fahrzeugs zu verbessern, wenn steile Treppen bewältigt werden müssen. Die getroffenen Massnahmen sollen mit Massnahmen zur Erhöhung der Bequemlichkeit der Treppenfahrt verträglich sein.

Die gestellte Aufgabe wird durch die Kombination der Merkmale des Anspruchs 1 gelöst.

Bei dem erfindungsgemässen Fahrzeug ist die Grundfläche durch eine Auslegervorrichtung nach vorne verlängert, so dass eine Notabstützung bei steilen Treppen gegeben ist, wenn die Schwerkraftlinie infolge der transportierten Person relativ weit vorne auf die Unterstützungsfläche auftrifft. Beim Übergang zwischen Treppenfahrt und Horizontalfahrt kommt die Auslegervorrichtung auf die horizontale Fahrtfläche, aus schräger Richtung zur Auflage, und die Stützrolle lenkt daraufhin das Fahrzeug in die Horizontale.

Die Auslegervorrichtung kann auch zur Vergrösserung der Stabilität quer zur Fahrtrichtung ausgenutzt werden. Zu diesem Zweck ist die Auslegervorrichtung in Längs- und Querrichtung zum Fahrzeug verstellbar ausgeführt.

Man kann die Auslegervorrichtung auch steckbar ausführen, so dass sie bei Nichtbedarf demontiert werden kann.

Die Auslegervorrichtung ist mit der Rollvorrichtung zum Manövrieren des Fahrzeugs auf horizontalem Untergrund kompatibel und kann mit ihrer Stützrolle bzw. Stützrollen einen Teil des Rollfahrwerks bilden. Der andere Teil des Rollfahrwerks wird durch zwei Rollen gebildet, die in der Nähe des hinteren Endes des Fahrzeuges angeordnet sind und die erfindungsgemässe Ausbildung der Rollvorrichtung ausmachen. Die Rollen der Rollvorrichtung sind an den Enden von hebelartigen Rollenträgern angebracht, welche infolge einer Achse schwenkbar sind, die im Bereich der Abwinklung der Raupenführungen gelagert ist. Die Rollenträger und damit auch die Rollen sind bei der Treppenfahrt lose, so dass sie den Treppenkanten ausweichen. Damit wird die Rollvorrichtung bei der Treppenfahrt automatisch ausser Wirkung gehalten. Sobald das Fahrzeug aber auf die horizontale Fahrtfläche kommt und es auf den Rollen aufsitzt, kommt die Drehsicherungseinrichtung der hebelartigen Rollenträger zur Wirkung, und die Rollen können nicht mehr ausweichen: Das Fahrzeug kann antriebslos manövriert werden, wobei dann die Raupen vom Boden angehoben sind und somit nicht stören.

Es werden zwei Ausführungsformen der Drehsicherungseinrichtung offenbart. Entweder wird die Verbindungsachse nach Aufsetzen der Fahrrollen durch Formschluss im Gerät gegen Drehen gesichert, oder die Anordnung der Rollenträger an der Verbindungsachse sorgt dafür, dass sich diese nach Aufsetzen der Fahrrollen nicht mehr drehen kann, weil der eine Rollenträger eine Rechtsdrehung und der andere eine Linksdrehung der Verbindungsachse herbeiführen möchte.

Die nachstehende Beschreibung von bevorzugten Ausführungsbeispielen der Erfindung dient im Zusammenhang mit den Zeichnungen der weiteren Erläuterung. Es zeigen:

Fig. 1 Seitenansicht des Fahrzeugs mit eingehängtem Rollstuhl in fahrbereiter Position vor der Einfahrt in die Treppe;

Fig. 2 Seitenansicht des Fahrzeugs während der Treppenfahrt;

Fig. 3 Draufsicht auf das Fahrzeug ohne Rollstuhl und Adapter;

Fig. 4 Seitenansicht der Partie mit Rollvorrichtung vor der Treppeneinfahrt;

Fig. 5 Seitenansicht der Partie mit Rollvorrich- tung während der Fahrt treppaufwärts;

Fig. 6 Seitenansicht der Partie mit Rollvorrich- tung während der Fahrt treppabwärts;

Fig. 7 Seitenansicht/Schnitt der Partie mit Ein- fach-Rollvorrichtung in eingerasteter Fahrstel- lung in der Horizontalebene;

Fig. 8 Seitenansicht/Schnitt der Partie mit Einfach-Rollvorrichtung in ausgerasteter Stellung während der Treppenfahrt und

Fig. 9 eine perspektivische Darstellung einer Einzelheit.

Das erfindungsgemässe Fahrzeug 20 ist zur Zusammenarbeit mit einem Rollstuhl 50 ausgebildet, welcher üblicherweise zwei im Abstand voneinander angeordnete grosse Räder 51, zwei Rollen 52, ein Gestell 54 einschliesslich eines Sitzes 55 und eine Führungsstange 56 besitzt. Das Fahrzeug 20 weist ein niedriges, schmales Chassis 1 auf, welches im Zwischenbereich zwischen den Rädern 51 und dem Gestell 54 Platz hat, so dass der Rollstuhl 50 für die Treppenfahrt unterfangen werden kann. Das Chassis 1 besitzt Verkleidungen 21, innerhalb welchen eine Batterie, ein Elek- tromotor und ein Schneckengetriebe unterge- bracht sind, wie es bekannt ist.

Am Chassis 1 sind Räder 22 und 23 in Paaren vorgesehen, wovon wenigstens ein Räderpaar (22) angetrieben ist. Raupen 2 in Form von genoppten Gummibändern sind über je eines der Räder 22, 23 und über eine Führungseinrichtung 3 gespannt, so dass in etwa ein keilförmiger Umriss gegeben ist. Jede Führungseinrichtung 3 besteht aus einer Schiene 24, die sich entlang des Bodens des Chassis erstreckt, und einer weiteren Schiene 25, die im Winkel von ungefähr 130 bis 150° zur Schiene 24 angeordnet ist und sich tangential zum Rad 23 erstreckt. Die Oberseite des Fahrzeuges 20 wird von einer Ladeplattform 26 und von Befestigungsschienen 27 eingenommen, an denen ein Rollstuhladapter 14 zum Eingriff gebracht werden kann. Der Rollstuhladapter 14 enthält zwei in Abstand zueinander angeordnete Stangen 16, an deren einem Ende Führungshandgriffe 15 und an deren anderem Ende Konsole 17 zum Untergreifen der Räder 51 vorgesehen sind. Am Rollstuhladapter 14 sind ferner Festhalteeinrichtungen 18 angebracht, die zur weiteren Befestigung des Rollstuhls 50 in geneigter Schwerpunktlage – zur Vorbereitung der Treppenfahrt – dienen.

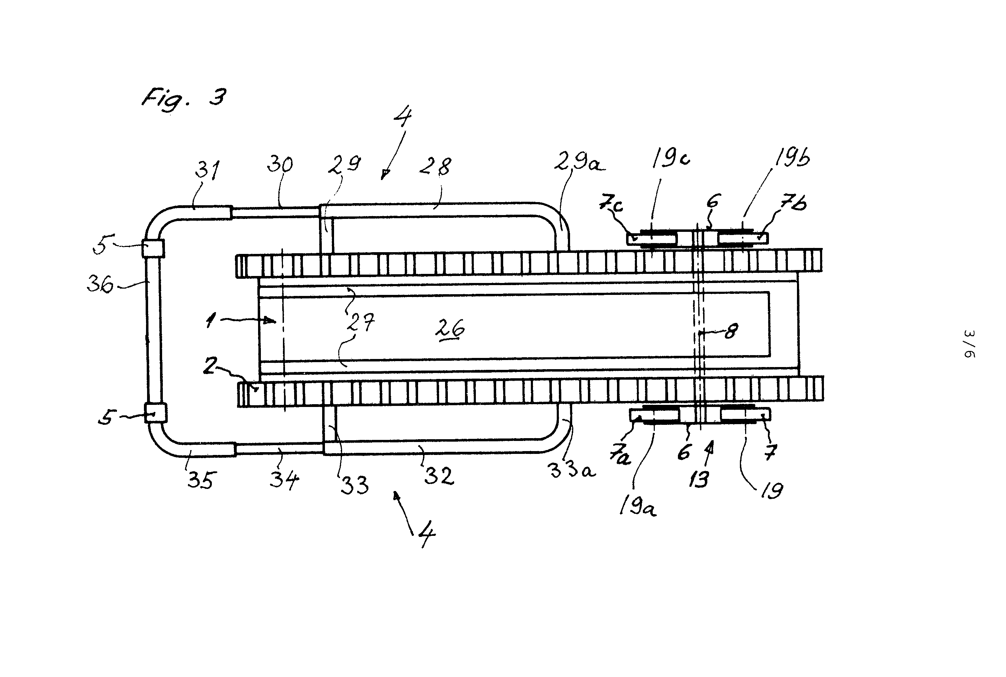

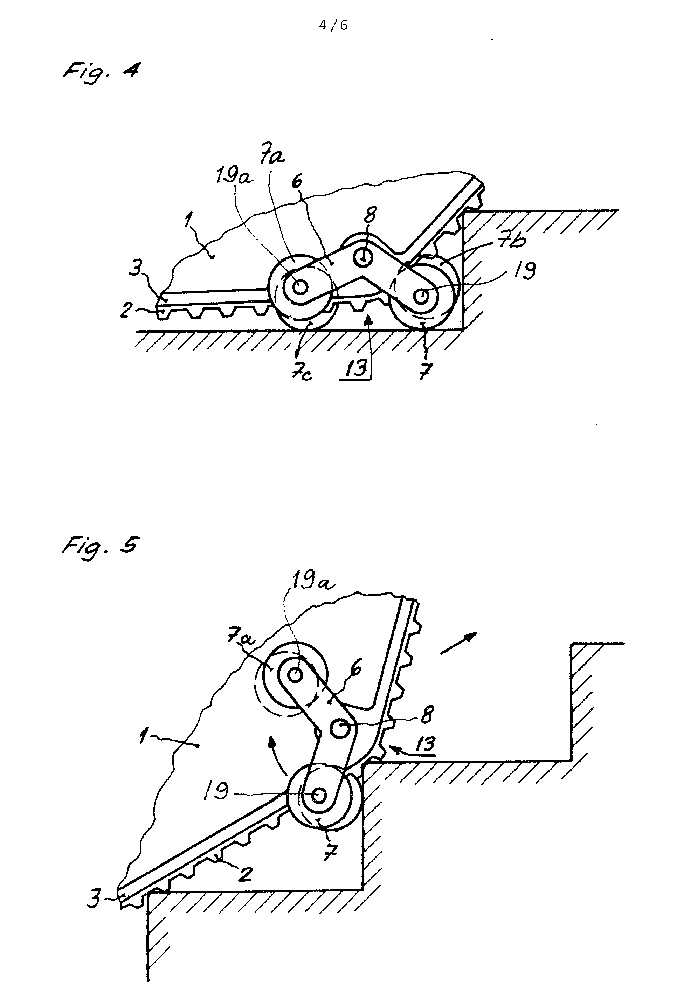

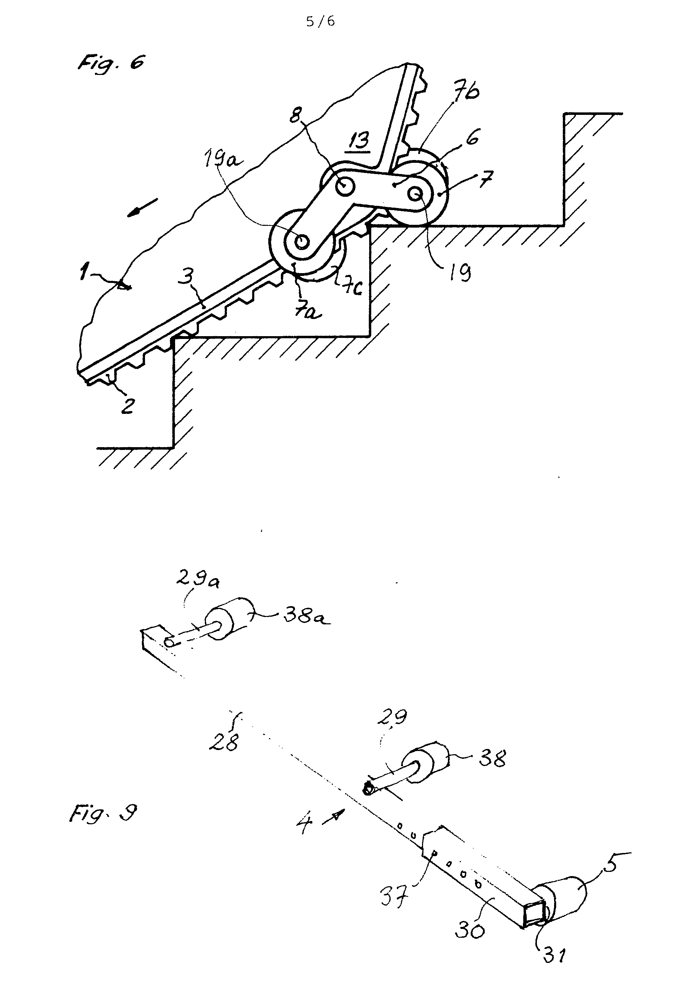

Am Fahrzeug 20 sind ferner zwei bodennahe Auslegervorrichtungen 4 angebracht, die an ihrem vorderen Ende mit Stützrollen 5 versehen sind. Jede Auslegervorrichtung 4 besteht aus Rohren oder Stangen 28–31 bzw. 32–35, die in zwei Gruppen angeordnet sind. Jede Auslegervorrichtung 4 enthält fest am Chassis 1 angebrachte Glieder 28, 29, 29a bzw. 32, 33, 33a, ferner teleskopierende Glieder 30 bzw. 34 und Verbindungsglieder 31 bzw. 35, an denen die Rollen 5 sitzen. Die beiden Auslegervorrichtungen 4 können durch ein Kopplungsglied 36 miteinander verbunden werden; dieses kann jedoch auch fehlen. Die Glieder 28, 30 und 32, 34 erstrecken sich parallel zu den Schienen 24, sind jedoch weiter ausserhalb angeordnet, wie am besten aus Fig. 3 ersichtlich. Dadurch wird die Grundfläche des Chassis 1 vergrössert und damit die Standfestigkeit in der Längsrichtung und/oder in der Querrichtung verbessert.

Fig. 9 zeigt eine bevorzugte Konstruktion der Auslegervorrichtung 4. Die Glieder 28, 30 bestehen aus Rechteckrohren, die teleskopierend ineinander geschoben werden und mit einem Querstift 37 miteinander verriegelt werden können. Die Glieder 29, 29a enthalten jeweils eine Stange und eine Muffe 38, 38a, die teleskopierend ineinander greifen und verriegelt werden können. Auf diese Weise ist es möglich, den Abstand der Rechteckrohre 28, 30 von dem Chassis 1 zu verändern, um die Standfestigkeit zu erhöhen oder die Fahrbreite zu verringern, je nach den Erfordernissen.

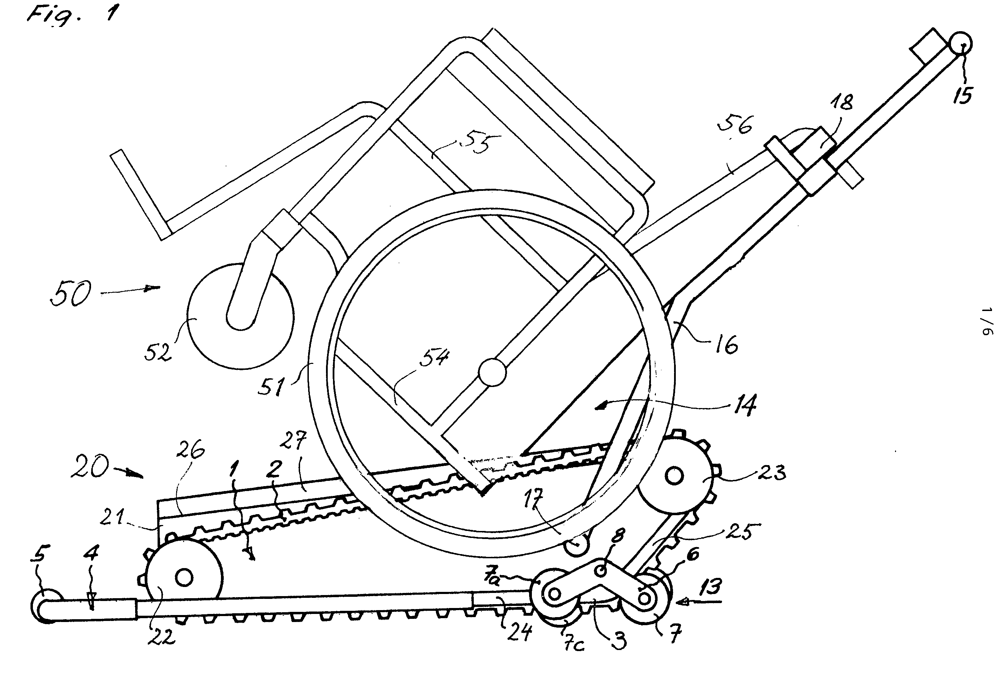

Die Führungseinrichtungen 3 für die Raupen 2 weisen eine Abwinklungsstelle auf, an der die beiden Schienen 24, 25 aufeinandertreffen. An dieser Abwinklungsstelle ist eine Rollvorrichtung 13 vorgesehen, die in zwei Ausführungsformen (Fig. 3 bis 6 und 7, 8) vorgestellt wird. Die erste Ausführungsform enthält doppelarmige Hebel 6, Rollen 7, 7a, 7b, 7c und eine Verbindungsachse 8, die im Chassis 1 drehbar gelagert ist. Die Hebel 6 sind ausserhalb der Verkleidung des Chassis und auch etwas ausserhalb der Umlaufbahn der Raupen 2 angeordnet und gemäss einem umgekehrten V geformt. Die Rollen 7, 7a, 7b, 7c ragen über den Umriss der Raupen 2 hinaus (Fig. 1, 2, 4, 6). Bei ebener Fahrbahn stützt sich das Fahrzeug 20 im wesentlichen auf den Stützrollen 5 und den Rollen 7 und 7c ab, wie später erläutert.

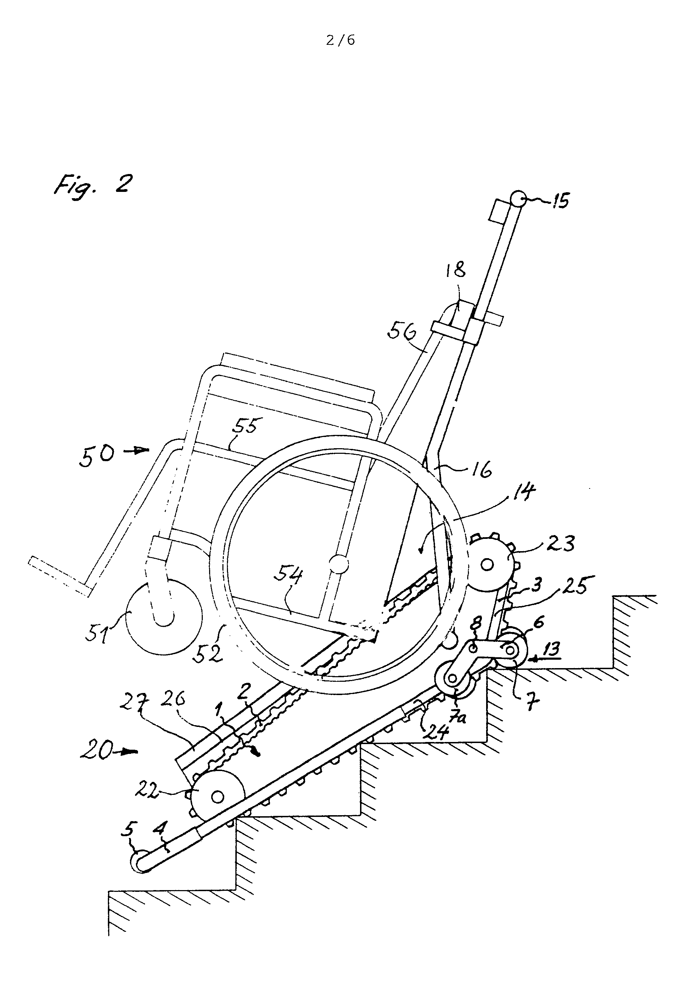

Fig. 2 zeigt das Fahrzeug 20 mit Rollstuhl 50 während der Fahrt auf einer Treppe. Die Rückenlehne des Rollstuhls 50 ist dabei treppaufwärts gerichtet, unabhängig von der Fahrtrichtung des Fahrzeugs 20. Bei mässiger Steigung der Treppe bleiben die Auslegervorrichtungen 4 demontiert oder eingefahren. Bei Treppen mit grösserer Steigung, oder wenn die Fahrsicherheit erhöht werden soll, werden die beiden Auslegervorrichtungen 4 montiert, indem die Enden 29, 29a in entsprechende Stellen des Chassis eingesteckt werden, beispielsweise in Muffen 38, 38a, wie in Fig. 9 dargestellt. Ausserdem wird die Länge der Auslegervorrichtungen an die Gegebenheiten angepasst, indem die teleskopierenden Glieder 28, 30 bzw. 32, 34 mehr oder weniger weit ineinander verschoben und verriegelt werden. Die erhöhte Standsicherheit wird nämlich durch eine gewisse Verringerung der Manövrierfähigkeit in der Horizontalebene erkauft, weswegen man die Auslegervorrichtung nur so weit wie notwendig ausfährt. Die Angaben hierzu liefert ein Winkelmesser mit entsprechenden Markierungen.

Bei der ersten Ausführungsform der Rollvorrichtung (Fig. 3 bis 6) sind die jeweiligen Rollen 7, 7a, 7b, 7c an den Enden der doppelarmigen Hebel 6 an jeweils einer Achse 19, 19a, 19b, 19c drehbar befestigt. Die Achsen 19, 19b und 19a, 19c sind ein wenig gegeneinander versetzt angeordnet, d.h. die Achsen 19, 19c verlaufen etwas weiter unten als die Achsen 19a, 19b. In der Praxis sind die doppelarmigen Hebel 6 auf beiden Chassisseiten winkelmässig gegeneinander verdreht an der Verbindungsachse 8 starr befestigt. Dadurch wird erreicht, dass bei einer Abstützung auf einer ebenen Fläche nur eine Rolle jeder Chassisseite aufsitzt, die deshalb als Fahrrolle 7 und 7c bezeichnet wird. Diese Fahrrollen 7, 7c stehen gewissermassen «kreuzweise» vor, während die Rollen 7a, 7b kreuzweise zurückstehen. Diese Anordnung bietet Vorteile beim Manövrieren, was insbesondere auf schmalen Treppenabsätzen von Bedeutung ist. Die Begleitperson kann nämlich durch Drücken auf die Führungshandgriffe 15 den Schwerpunkt auf die hinteren Rollen verlagern und dann das Fahrzeug drehen, ohne dass dabei ein so hoher Widerstand überwunden werden müsste, wie dieser sonst bei Doppelrollen auftritt.

Infolge der Anordnung der Rollen 7, 7a, 7b, 7c an den Enden der doppelarmigen Hebel 6 haben die Rollen eine solche Beweglichkeit, dass sie dem «Hindernis Treppenkante» ausweichen, wie am besten aus Fig. 2, 5 und 6 ersichtlich. Das Fahrzeug 20 ruht nur auf den Raupen 2 und kann sich mit den Rollen nicht an einer Treppenkante abstützen. Dies bedeutet andererseits, dass die Rollvorrichtung 13 die Treppenfahrt nicht behindert.

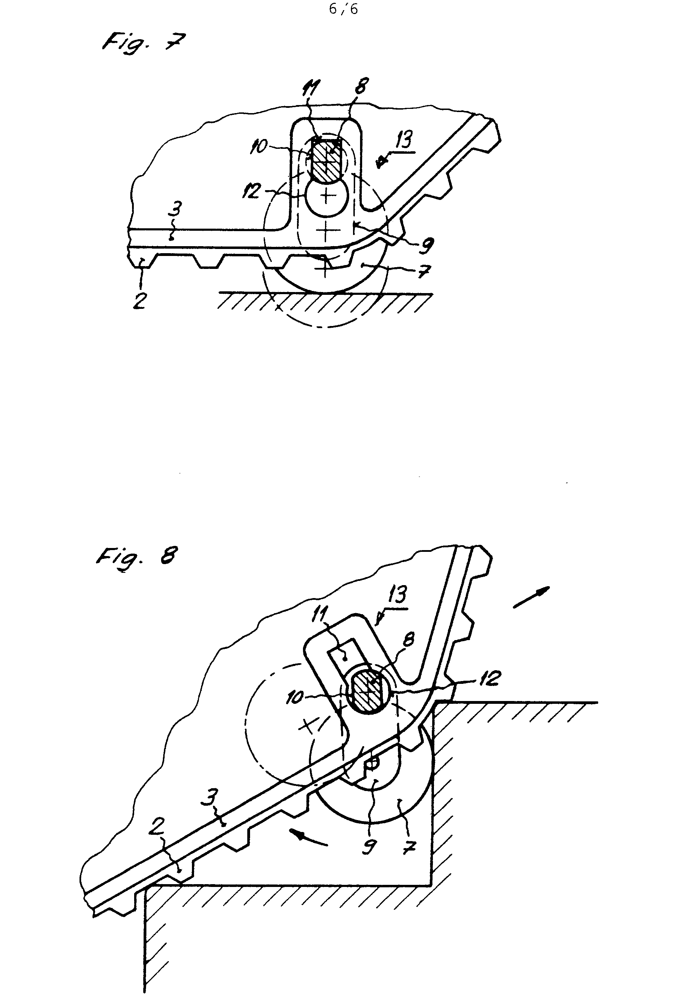

Wie ersichtlich, sind die doppelarmigen Hebel 6 winklig ausgebildet, wobei die beiden Hebelarme jeweils schräg nach unten weisen. Dies hat zur Folge, dass die Rollen 7, 7a, 7b, 7c infolge der Schwerkraft die Tendenz haben, eine untere Lage einzunehmen. Wenn demnach das Fahrzeug nach einer Treppenfahrt auf einem Podest ankommt, wie es etwa in Fig. 4 für die Abwärtsfahrt dargestellt ist, landet das Fahrzeug auf den Fahrrollen 7, 7c und kann ohne Schwierigkeit antriebslos geschoben sowie gegebenenfalls gewendet werden, wie bereits beschrieben. Das vordere Ende bei den Stützrollen 5 hebt dabei ein wenig vom Boden ab und behindert somit das Wendemanöver nicht.

In Fig. 7 und 8 ist eine Abwandlung der Rollvorrichtung 13 dargestellt. Im Bereich der Abwinklung der Führungseinrichtung 3 sind schlüssellochartige Aussparungen 11, 12 vorgesehen, die eine Kulissenführung 11 und einen Bohrungsbereich 12 aufweisen. Die Verbindungsachse 8 hat Abflachungen 10, die in diesen Kulissenführungen 11 sitzen. Der untere Bohrungsbereich 12 ermöglicht eine Drehung der Verbindungsachse 8, während in der oberen nutförmigen Kulissenführung 11 die Verbindungsachse 8 gegen Drehung gesichert ist. Mit der Verbindungsachse 8 sind Rollenträger 9 starr verbunden, und an jedem Rollenträger 9 sitzt eine Fahrrolle 7.

Wenn die eine oder beide Fahrrollen 7 belastet werden, gleitet die Verbindungsachse 8 mit ihren Abflachungen 10 in die Kulissenführung 11 und findet schliesslich einen Widerhalt, wie in Fig. 7 dargestellt. Nunmehr kann das Fahrzeug 20 auf den Rollen 7 manövriert werden, wie bereits beschrieben.

Bei der Treppenfahrt gelangt die Verbindungsachse 8 in den Bohrungsbereich 12, so dass die Rollenträger 9 und die Rollen 7 wegschwenken können und keine Behinderung für die Treppenfahrt darstellen. Die Wirkung der Schwerkraft auf die Rollen 7 kann im übrigen durch Federkraft unterstützt werden, so dass die in Fig. 8 dargestellte Lage sicher eingenommen wird.

Die Auslegervorrichtung 4 kann auch einteilig ausgebildet sein, beispielsweise aus einem Blech bestehen.

**Patentansprüche**

1. Treppengängiges Transportfahrzeug mit folgenden Merkmalen:

a) es umfasst ein zum Unterfangen eines Rollstuhls (50) gestaltetes, niedriges, schmales Chassis (1) mit Grundfläche, Seitenflächen und Deckfläche, das an jeder der Längsseiten Raupenführungen (3), antreibbare Räder (22, 23) und je ein Raupenband (2) aufweist;

im Chassis (1) ist ein motorischer Raupenantrieb mit Energiequelle, Motor und Getriebe angebracht;

das Chassis (1) weist auf seiner Deckfläche Befestigungseinrichtungen (27) für

b) einen Rollstuhladapter (14) auf, der mit Griffen (15) für eine Begleitperson und mit Festhalteeinrichtungen (18) zur Befestigung des Rollstuhls (50) in geneigter Lage versehen ist, wobei der Rollstuhladapter (14) relativ zum Chassis (1) geschwenkt werden kann;

c) der Rollstuhladapter (14) ist zum lösbaren Halten des Rollstuhls (50) ausgebildet, so dass das treppengängige Transportfahrzeug (20) und der Rollstuhl (50) zusammen oder getrennt voneinander verwendet werden können,

d) eine am Chassis (1) angebrachte Rollvorrichtung (13) ist zum Manövrieren des Fahrzeugs (20) auf ebener Fahrfläche vorgesehen;

gekennzeichnet durch folgende Massnahmen:

e) an wenigstens einer geeigneten Seitenfläche des Chassis (1) nahe dessen Grundfläche ist wenigstens eine über die vordere Begrenzung des Chassis hinausragende Auslegervorrichtung (4) lösbar befestigt, die sich von dieser Seitenfläche nach seitwärts und vorn erstreckt, um die Grundfläche des Chassis (1) zu vergrössern und damit die Stabilität des Fahrzeugs (20) zu verbessern;

f) am vorderen Ende jeder Auslegervorrichtung (4) ist eine Stützrolle (5) vorgesehen;

g) die Auslegervorrichtung (4) ist in der Längs- und/oder Querrichtung zum Fahrzeug (20) einstellbar ausgebildet, wenn und soweit wechselnd steile Treppen zu bewältigen sind.

2. Fahrzeug nach Anspruch 1, dadurch gekennzeichnet, dass die Auslegervorrichtung (4) steckbar ist.

3. Fahrzeug nach Anspruch 1 oder 2, dadurch gekennzeichnet, dass die Stützrolle (5) der Auslegervorrichtung (4) und die Rollvorrichtung (13) zur Abstützung des Fahrzeugs (20) auf ebener Fahrbahn angeordnet sind.

4. Fahrzeug nach einem der Ansprüche 1 bis 3, gekennzeichnet durch folgende Merkmale:

die Rollvorrichtung (13) weist auf jeder Längsseite des Chassis (1) jeweils eine einzige, zum Aufsitzen am Boden bestimmte Fahrrolle (7, 7c) auf;

jede dieser Fahrrollen (7, 7c) ist am Ende eines zugeordneten, hebelförmigen Rollenträgers (6, 9) drehbar befestigt;

die Rollenträger (6, 9) beider Chassislängsseiten sind durch eine Verbindungsachse (8) starr miteinander verbunden, die im Bereich einer Abwinklungsstelle der Raupenführungen (3) schwenkbar gelagert ist, so dass die Fahrrollen (7, 7c) durch Schwerkraft in eine Lage geführt werden, in der sie über den Umriss der Raupenbänder (2) hinausragen, bei der Treppenfahrt eine lose Lage einnehmen und so an Treppenkanten ausweichen können;

eine Drehsicherungseinrichtung sichert die Schwenklage der Verbindungsachse (8) und damit der Rollenträger (6, 9), wenn die Fahrrollen (7, 7c) am Boden aufsitzen und vom Fahrzeuggewicht belastet sind.

5. Fahrzeug nach Anspruch 4, dadurch gekennzeichnet, dass im Bereich der Abwinklungsstelle der Raupenführungen (3) schlüssellochartige Aussparungen (11, 12) mit oberen Kulissenführungen (11) und unteren Bohrungsbereichen (12) vorgesehen sind, dass die Verbindungsachse (8) Abflachungen (10) zum Eingriff in die Kulissenführungen (11) besitzt und dass die Abflachungen (10) und die Kulissenführungen (11) in ihrem Zusammenwirken die Drehsicherungseinrichtung der Rollenträger (6, 9) bilden.

6. Fahrzeug nach Anspruch 5, dadurch gekennzeichnet, dass eine Feder die Verbindungsachse (8) in den Bohrungsbereich (12) der schlüssellochartigen Aussparung (11, 12) drängt.

7. Fahrzeug nach Anspruch 4, dadurch gekennzeichnet, dass die Rollenträger (6) als umgekehrt-V-förmige, doppelarmige Hebel ausgebildet sind, deren einer Hebelarm mit einer Fahrrolle (7, 7c) un dderen anderer Hebelarm mit einer angehobenen Rolle (7a, 7b) versehen ist und dass die Rollenträger (6) zu diesem Zweck an jeder Chassislängsseite winkelmässig ein wenig gegeneinander versetzt an der Verbindungsachse (8) starr befestigt sind, wobei die Fahrrollen (7, 7c), die zugeordneten Hebelarme der Rollenträger (6) und die Verbindungsachse (8) in ihrem Zusammenwirken mit dem (ebenen) Boden die Drehsicherungseinrichtung bilden.

**Revendications**

1. Véhicule transporteur franchissant les escaliers offrant les caractéristiques suivantes:

a) il comprend un châssis (1) étroit, bas, fait pour soutenir un fauteuil roulant (50), ce châssis comporte un plancher, des faces latérales, une couverture supérieure et présente sur chacun des côtés longitudinaux des guides de chenilles (3), des roues entraînables (22, 23) et une chenille (2);

dans le châssis (1) est placée une commande par moteur des chenilles, comportant une source d'énergie, un moteur et une transmission; le châssis (1) présente sur sa couverture supérieure des dispositifs de fixation (27) pour

b) un adaptateur (14) de fauteuil roulant, cet adaptateur est pourvu de poignées (15) pour un accompagnateur et d'installations de fixation (18) pour fixer le fauteuil roulant (50) en position inclinée, l'adaptateur (14) de fauteuil rouland pouvant pivoter par rapport au châssis (1);

c) la fixation adaptateur (14) -fauteuil roulant (50) est amovible, de sorte que le véhicule transporteur (20) franchissant les escaliers et le fauteuil roulant (50) peuvent être utilisés ensemble ou séparément;

d) un dispositif de roulement (13) monté sur le châssis (1) est prévu pour manœuvrer le véhicule (20) sur surface plane;

caractérisé par les dispositions suivantes:

e) pour augmenter la surface de base du châssis (1) et améliorer ainsi la stabilité du véhicule (20), est fixée sur au minimum l'une des faces latérales appropriées du châssis (1), près du plancher de celui-ci, au moins une console (4), s'étandant sur le côté et vers l'avant de cette face latérale, amovible, faisant saillie au-delà de l'avant du châssis;

f) à l'extrémité avant de chaque console (4) est prévu un rouleau d'appui (5);

g) la console (4) est réglable dans le sens longitudinal et transversal du véhicule (20), lorsque et pour autant qu'il s'agit de venir à bout d'escaliers de raideurs variables.

2. Véhicule selon la revendication 1, caractérisé en ce que la console (4) est enfichable.

3. Véhicule selon la revendication 1 ou 2, caractérisé en ce que les rouleaux d'appui (5) de la console (4) et le dispositif de roulement (13) sont organisés pour le support du véhicule (20) sur une voie plane.

4. Véhicule selon l'une des revendications 1 à 3, caractérisé par les particularités suivantes:

le dispositif de roulement (13) présente respectivement sur chaque côté longitudinal du châssis (1) un galet de roulement unique (7, 7c) conçu pour être posé sur le sol;

chacun de ces galets de roulement (7, 7c) est fixé mobile à l'extrémité d'un support de galet (6, 9) adjoint en forme de levier;

les supports de galets (6, 9) des deux côtés longitudinaux du châssis sont reliés ensemble rigidement par un axe de jonction (8), qui est logé pivotant dans le secteur d'un emplacement de courbure des guides de chenilles (3), de sorte que les galets de roulement (7, 7c) sont amenés par gravité dans une position dans laquelle ils font saillie au-delà du contour des chenilles (2), occupent une position mobile lors du parcours dans l'escalier et peuvent ainsi esquiver les arêtes des marches;

un dispositif de sécurité en rotation assure la position de pivotement de l'axe de jonction (8) et donc des supports de galets (6, 9) lorsque les galets de roulement (7, 7c) reposent sur le sol et sont chargés du poids du véhicule.

5. Véhicule selon la revendication 4, caractérisé en ce que dans le secteur de l'emplacement de courbure des guides de chenilles (3) sont prévus des évidements (11, 12) du genre trou de serrure comportant des guides de coulisse (11) en haut et des secteurs d'alésage (12) en bas, en ce que l'axe de jonction (8) possède des méplats (10) en vue de l'engagement dans les guides de coulisse (11) et en ce que les méplats (10) et les guides de coulisse (11) constituent en coopérant le dispositif de sécurité en rotation des supports de galets (6, 9).

6. Véhicule selon la revendication 5, caractérisé en ce qu'un ressort pousse l'axe de jonction (8) dans le secteur d'alésage (12) de l'évidement (11, 12) du genre trou de serrure.

7. Véhicule selon la revendication 4, caractérisé en ce que les supports de galets (6) sont des leviers en forme de V renversé à deux bras, dont l'un est pourvu d'un galet de roulement (7, 7c) et l'autre d'un galet soulevé (7a, 7b) et en ce qu'à cet effet les supports de galets (6), fixés rigidement à l'axe de jonction (8), sont de chaque côté longitudinal du châssis légèrement décalés angulairement l'un par rapport à l'autre, les galets de roulement (7, 7c), les bras de levier adjoints des supports de galets (6) et l'axe de jonction (8) constituant en coopérant avec le sol (plan) le dispositif de sécurité en rotation.

**Claims**

1. A transport vehicle adapted to negotiate stairs and having the following features:

a) it comprises a low narrow chassis (1) which is constructed to engage beneath a wheelchair (50) and which has a base surface, side surfaces and a top surface, the chassis having, at each of the longitudinal sides, caterpillar track guides (3), drivable wheels (22, 23) and a caterpillar track (2) on each side;

a caterpillar track motor drive comprising a power source, motor and transmission is mounted in the chassis (1);

the chassis (1) has, on its top surface, fixing means (27) for

b) a wheelchair adapter (14) which is provided with handles (15) for an escort and with locking means (18) for fixing the wheelchair (50) in an inclined position, the wheelchair adapter (14) being pivotable relatively to the chassis (1);

c) the wheelchair adapter (14) is constructed to hold the wheelchair (50) releasably so that the stair-going transportation vehicle (20) and the wheelchair (50) can be used together or separately;

d) a running gear (30) mounted on the chassis (1) is provided for manœvering the vehicle (20) on a flat surface;

characterised by the following steps:

e) at least one extension device (4) is releasably secured to at least one suitable side surface of the chassis (1) near its base surface, said extension device (4) projecting beyond the front boundary of the chassis and sideways and forwardly from said side surface in order to enlarge the base surface of the chassis (1) and hence improve the stability of the vehicle (20);

f) a support roller (5) is provided at the front end of each extension device (4);

g) the extension device (4) is adjustable in the longitudinal and/or transverse direction of the vehicle (20), when and where steps of varying steepness are to be negotiated.

2. A vehicle according to claim 1, characterised in that the extension device (4) is of plug-in type.

3. A vehicle according to claim 1 or 2, characterised in that the support roller (5) of the extension device (4) and the running gear (13) are adapted to support the vehicle (20) in a flat surface.

4. A vehicle according to any one of claims 1 to 3, characterised by the following features:

on each longitudinal side of the chassis (1) the running gear (13) comprises a single running roller (7, 7c) adapted to bear on the ground; each of these running rollers (7, 7c) is secured rotatably at the end of an associated roller support (6, 9) in the form of a lever; the roller supports (6, 9) of the two longitudinal sides of the chassis are rigidly interconnected by a connecting shaft (8) which is mounted pivotally in the zone where the caterpillar track guides (3) are bent, so that the rollers (7, 7c) are guided by gravity into a position in which they project beyond the contour of the caterpillar tracks (2), assume a loose position during the negotiation of stairs and can thus yield at the edges of stairs; a locking device locks the connecting shaft (8) in its pivoted position and hence locks the roller supports (6, 9) when the running rollers (7, 7c) bear on the ground are loaded with the vehicle weight.

5. A vehicle according to claim 4, characterised in that keyholeshaped openings (11, 12) are provided in the area of the place where the caterpillar track guides (3) are bent, and have top slide guides (11) and bottom bore zones (12), the connecting shaft (8) has flats (10) for engagement in the slot guides (11) and the flats (10) and slot guides (11) co-operate to form the locking device for the roller supports (6, 9).

6. A vehicle according to claim 5, characterised in that a spring forces the connecting shaft (8) into the bore zone (12) of the keyhole-shaped opening (11, 12).

7. A vehicle according to claim 4, characterised in that the roller supports (6) are constructed as inverted-V double-armed levers, one lever arm being provided with a roller (7, 7c) and the other lever arm being provided with a raised roller (7a, 7b) and the roller supports (6) are for this purpose slightly offset angularly from each other on each longitudinal side of the chassis and are rigidly secured to the connecting shaft (8), the running rollers (7, 7c), the associated lever arms of the roller supports (6) and the connecting shaft (8) co-operating with the (flat) ground to form the locking device.

Fig. 1

Fig. 2

Fig. 3

Fig. 4

Fig. 5

Fig. 6

Fig. 9

Fig. 7

Fig. 8